# EUROPEAN PATENT SPECIFICATION

(11) **EP 1 849 431 B1**
(45) Date of publication and mention of the grant of the patent: **23.03.2011**
(21) Application number: 05701708.9
(22) Date of filing: 08.02.2005
(51) Int. Cl.: A61C 8/00

(54) **NARROW DENTAL IMPLANT AND ASSOCIATED PIECES**
SCHMALES ZAHNIMPLANTAT UND ZUGEORDNETE TEILE
IMPLANT DENTAIRE ETROIT ET PIECES ASSOCIEES

(43) Date of publication of application: 31.10.2007
(73) Proprietor: Biotechnology Institute, I Mas D, S.L., 01005 Vitoria (Álava) (ES)
(72) Inventor: ANITUA ALDECOA, Eduardo, E-01005 Vitoria_(Álava) (ES)
(74) Representative: Urteaga Simarro, José Antonio
(86) International application number: PCT/ES2005/000057
(87) International publication number: WO 2006/084922

(56) References cited:
- WO-A1-98/03130
- WO-A1-98/32393
- WO-A1-99/18881
- WO-A1-03/086225
- US-A- 4 863 383
- US-A- 5 022 860
- US-A1- 2002 150 862

## Description

### Technical field

The invention relates to a dental implant that enables the fitting or installing of one or more dental prosthesis or artificial teeth in the maxillary bone of a patient.

### Prior art

As is well known in the prior art, dental implants are generally threaded parts that are inserted into the maxillary bone of a patient and to which, following a process of osseointegration or bone integration of the implant in said maxillary bone (or even before osseointegration takes place), a dental prosthesis with one or more artificial teeth is affixed. To achieve this, a series of associated parts are needed. These associated parts enable the insertion of the implant into the maxillary bone, the fixing of the dental prosthesis, and other actions.

Dental implants in current use, including the dental implants in document WO-0224102-A1, filed by the applicant, have certain characteristics that prevent them from being used satisfactorily in certain treatment and rehabilitation applications and strategies. Specifically, in certain applications, some examples of which will be given below, implants have been shown to be essentially too thick. In other words, their external diameters are too large for the requirements of the application.

A first application or rehabilitation strategy in which the performance of implants with conventional diameters can be improved is that in which one or more implants are to be installed in the wide area of a hybrid maxillary bone crest (maxillary bone that has wider and narrower areas of bone crest). This is for example the case of a patient with partial or complete edentulism (lack of teeth). In this rehabilitation strategy, it is common for the patient to continue using their dentures while the implants installed in the wide areas of the maxillary bone osseointegrate. This is extremely uncomfortable and unpleasant as the dentures are disposed in such a way that they press on the implants (if the implants are visible) or on the gums covering the implants (if the implants are hidden).

A second application in which the use of implants with conventional diameters is not entirely satisfactory is that in which an implant is installed in a narrow area of a maxillary bone crest. In order to install conventional implants in the narrow areas of a maxillary bone crest it is currently common practice to carry out a process of widening said narrow crest beforehand, or even a process of implanting hip and calvarian bone grafts, etc. These processes involve complex surgery, besides having to wait an additional time for the widened crest bone to regenerate or for the graft to settle. For all patients, in particular certain types such as elderly patients or patients at risk (smokers, etc.), the widening of the crest or the use of grafts are in fact to be avoided.

A third application in which the use of implants of conventional diameters is not entirely satisfactory is that in which various implants are to be installed in adjacent narrow and wide areas of a hybrid maxillary bone. One current common practice involves the fitting of one or two conventional dental implants in the wide area; then, a projection or bridge piece are connected to the dental implants; finally, various prosthetic elements are connected to the projection or bridge piece. In other words, the application allows a single dental implant or two interconnected dental implants to support several artificial dental parts. The drawback with this system is that only one or two dental implants must endure the local mechanical forces of all the prosthetic elements that they carry, these mechanical forces being of all types and directions. As a consequence, the implants can easily fail, leading to the appearance of a certain mobility in the implants or in the prosthodontic components connected to the implants.

A fourth application in which the use of implants of conventional diameters is not entirely satisfactory is that in which a dental implant and a dental prosthesis are to be installed in a maxillary area, be it wide or narrow, with the requirement that the dental prosthesis be positioned at the same time as the implant is fitted, in other words, without waiting weeks or months for the osseointegration of the implant in the maxillary bone to occur. This practice, known as 'immediate loading', is becoming increasingly common due to the increasingly frequent need to find rapid and effective surgical-prosthodontic solutions. It represents a challenge in oral surgery due to its difficulty, mainly in terms of preventing faults such as the anchoring or installation of the implant working loose. Using conventional implants, the number of patients upon which immediate loading can be practised is in fact greatly reduced, mainly because the patient's maxillary bone must be very high quality so that there are enough chances that the implant anchors properly.

It is an objective of the invention to design a dental implant that provides increased patient comfort during certain treatment strategies, by providing solutions and alternatives that are more comfortable than those offered by conventional techniques.

It is another objective of the invention to design a dental implant that, in certain treatment strategies, does not require performing traumatic processes such as the widening of narrow crests or the use of hip and calvarian bone grafts.

It is another objective of the invention to design a dental implant by virtue of which, in those treatment strategies where there is not enough space in the maxillary bone for a conventional dental implant and where prior art requires the use of projections, the use of projections can in fact be avoided.

It is another objective of the invention to design a dental implant that enables a better anchoring of the implant to the maxillary bone in immediate loading strategies, thereby improving the implementation of said strategies.

It is another objective of the invention to design a dental implant that is suitable for the aforementioned treatment strategies, and which also offers a robustness or lack of breakage points comparable to that of the narrowest conventional implants among known conventional implants (i.e., implants with a diameter of 3.3 mm). In this way, these dental implants, which in principle could be considered as transitional (not permanent), may also be used as permanent implants, i.e. as implants that are designed to be inserted permanently in the maxillary bone of the patient.

It is another objective of the invention to achieve a design that acts as an anchor for orthodontic treatments such as the straightening of a flattened second molar.

### Detailed description of the invention

In order to achieve the aforementioned objectives, the invention defines a narrow dental implant.

Similarly to conventional implants, the dental implant according to the invention comprises a head, a threaded body and an apical end or apex. The implant is solid and comprises a blind threaded hole for the connection of a screw. The dental implant according to the invention is categorised as 'narrow' because one of its essential innovative characteristics is that it presents a reduced thickness or diameter in comparison with prior art implants. This innovative characteristic is accompanied by other additional changes in the design of the implant, so that the reduction of the thickness of the implant does not reduce the implant's robustness, preloading capability, ability to prevent the appearance of breakage points, and other necessary qualities.

The narrow dental implant according to the invention has the following characteristics:
- The threaded body of the implant comprises a cylindrical threaded area and a lower conical threaded area, with the innovative characteristic that there is a second conical threaded area, or upper conical threaded area, between the head of the implant and the cylindrical threaded area. The cylindrical threaded area has an external diameter of between 2.5 and 3.25 mm and an internal diameter of between 1.9 and 2.7 mm. These diameters are smaller than the diameters of the prior art dental implants, giving the inventive dental implant its 'narrow' quality and making it suitable for certain applications, as will be explained at a later stage. The upper conical threaded area in turn has a length of 1.2 mm and has a thread that increases in depth as it approaches the cylindrical threaded area, said depth always being less than that of the threads of the cylindrical threaded area for the purpose of increasing the thickness of the wall of the implant in the area of the blind threaded hole and thereby providing the implant with greater solidity. Preferably, the upper conical threaded area comprises two complete turns of thread.
- The head of the implant comprises a lower area, a cylindrical area and a hexagonal protuberance. The lower area has a conical shape for the purpose of providing greater primary stability to the implant, in comparison to an implant with identical characteristics but with a cylindrical lower area. This conical lower area of the head of the implant has a height of 1.8 mm and a maximum diameter of 3.5 mm. In addition, the hexagonal protuberance of the head of the implant is new in that it has a height of 1.1 mm and in that a circle drawn external and touching the vertices of the hex has a diameter ranging between 2.8 and 3.0 mm. This height is greater than that of the hexagonal protuberances of conventional dental implants in order to provide greater leverage and in order to provide increased resistance to both mechanical torque forces during the insertion of the implant and lateral forces during mastication.
- The blind threaded hole is shorter than the blind threaded holes in conventional dental implants, due to the fact that if the blind threaded hole formed in the narrow implant were as long as in conventional implants, the thickness of the narrow implant in the area of the blind threaded hole would be reduced to very fragile limits. The reduction in the length of the blind threaded has to be careful not to negatively affect the 'preloading' (force of the union between the implant and the prosthetic component by means of the screw). The optimal characteristics of the implant are achieved with a blind threaded hole of a length of between 2.5 and 3.0 mm and comprising a total of between 3 and 6 turns of thread. Additionally, the thread of the blind threaded hole has an internal diameter of between 1.3 and 1.7 mm and an external diameter of between 1.6 and 2.2 mm. Preferably, the section of the thread is not triangular: instead, its tip is rounded or bevelled. Also, the blind threaded hole may present a non-threaded first part to enable the screws to be inserted, the height of this first part preferably being 0.7 mm.

The combination of a shortened blind threaded hole, a conicity of the lower area of the head of the implant, and a reduction in the depth of the thread of the upper conical threaded area makes the implant according to the invention especially rigid and strong.

The invention contemplates the provision of narrow dental implants of different lengths, preferably with implant lengths of between 7.0 and 20.0 mm (where the length is calculated as the sum of the lengths of all its parts except the hexagonal protuberance). Of course, the invention does not discard using other lengths not comprised in this preferred range.

The narrow dental implants according to the invention provide many advantages. Firstly, even though the narrow implants have a very reduced diameter in comparison with the conventional implants, the design of the narrow implants allows said implants to offer greater resistance to flexion than the narrowest conventional implants (conventional implants of a diameter of 3.3 mm). Among many other applications, the narrow implant according to the invention can therefore be used as a definitive implant for replacing small-sized dental parts, such as central incisors, lower lateral incisors, or small upper lateral incisors.

Secondly, the invention also allows for the possibility of adopting different rehabilitation strategies in certain situations that are complex but nevertheless frequent, and that have been resolved up to now by other more limited strategies. Some examples of these situations have been mentioned in this document.

For example, one situation is that in which one or more conventional implants are to be installed in a narrow area of a hybrid maxillary bone crest. According to prior art, the patient was obliged to uncomfortably use their dentures while the conventional implants osseointegrated. Thanks to the invention, instead, narrow implants can be installed in the narrow areas of the maxillary bone while implants with conventional diameters osseointegrate in the wide areas. Then, while the conventional implants fitted in the wide area consolidate, the narrow implants may support transitional dental prostheses. This thus allows the patient to avoid having to use their uncomfortable dentures in the meantime that the conventional implants osseointegrate, which may last for at least several months.

Another situation is that in which an implant is to be installed in a narrow area of a maxillary bone crest. In this scenario, the narrow implant according to the invention may be installed as a permanent implant in the narrow area of the bone crest, without having to perform a widening of the crest beforehand or simply performing a minimal widening with the narrow implant itself. In other words, the need for a crest-widening surgery is avoided.

Another situation is that in which several implants are to be installed in adjacent narrow and wide areas of a hybrid maxillary. Narrow dental implants allow performing improved treatments, in comparison with conventional treatments normally carried out using projections. For example, it is possible to install narrow implants in the narrow areas and thereby no longer need to connect projections to the conventional implants inserted in the wide areas. This thus improves the distribution of the mechanical forces in comparison with the conventional scenario, where mechanical forces were concentrated on one or two conventional implants, making them particularly vulnerable to lateral forces and torque.

Nevertheless, there may be cases in which the fitting of multiple prostheses on a series of conventional lateral implants is advisable, in which case the fitting of the prostheses may be strengthened with the insertion of one or more inventive narrow implants. In this way, the torque forces on the implants are reduced, thereby allowing them to support nothing more than compression forces.

Another situation is that in which a dental implant and a dental prosthesis are to be inserted into a maxillary area by means of an immediate loading process. The narrow implants according to the invention increase the anchoring of the prosthesis to the maxillary bone and improve the performance of immediate loading treatments. This is due to the fact that, for purely mechanical reasons, narrow implants achieve a better embedding in the jawbone than thicker conventional implants. Additionally, as the implant is narrow it can anchor itself both to the upper cortical and in the lower cortical areas of the maxillary bone. Anchoring the implant to both cortical areas would be very traumatic if the implant were conventional (thicker); thicker conventional implants are only anchored to the upper cortical area. For example, the implant may be positioned by the lingual or vestibular of the inferior alveolar nerve, thereby avoiding an anatomical structure that is difficult to avoid with a conventional implant.

An additional advantage offered by the narrow dental implant according to the invention is that the lower conical threaded area, being so narrow, enables the implant to present a greater penetration capability and even allows it to be fitted using only a single start drill. In addition, as the lower threaded area is both conical and narrow, the implant itself can perform the crest expansion, thereby reducing the number of procedures and the total operating time required in certain applications or scenarios.

### Description of the drawings

Details of the invention can be seen in the accompanying non-limiting drawing:

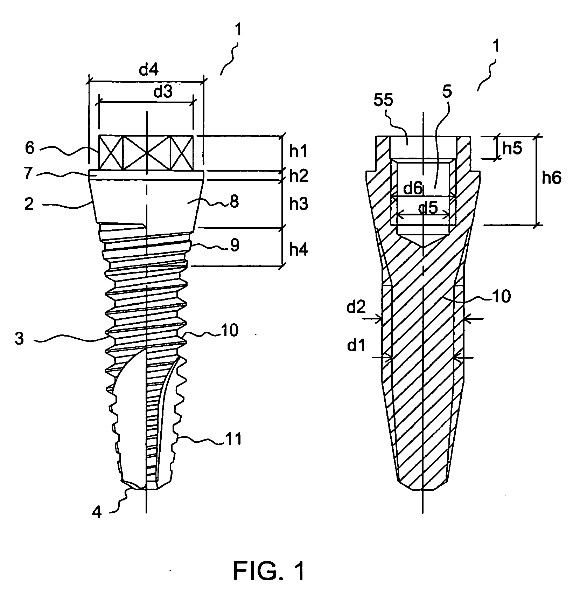

- Figure 1 shows an elevation and a cross-sectional elevation of a narrow dental implant according to the invention.

### Detailed description of the invention

Figure 1 shows an elevation and a cross-sectional elevation of an inventive narrow dental implant (1). The implant (1) is formed of a head (2), a threaded body (3) and an apical end or apex (4). The implant is solid and presents a blind threaded hole (5) in its interior, for the connection of a screw. According to the invention, the threaded body (3) comprises an upper conical threaded area (9) above the cylindrical threaded area (10) and a lower conical threaded area (11). The cylindrical threaded area (10) has an external diameter (d2) of between 2.5 and 3.25 mm and an internal diameter (d1) of between 1.9 and 2.7 mm. These diameters are smaller than the diameters of conventional implants, and provide the inventive dental implant with the quality of being 'narrow' and suitable for certain applications. The upper conical threaded area (9) presents a height (h4) of 1.2 mm and comprises a total of two turns of thread. The thread increases in depth as it approaches the cylindrical threaded area (10), said depth always being less than that of the threads of the cylindrical threaded area (10) in order to increase the thickness of the wall of the implant (1) in the area of the blind threaded hole (5) and thereby provide the implant (1) with greater robustness.

The head (2) of the implant (1) comprises a lower area (8), a cylindrical area (7) and a hexagonal protuberance (6). The lower area (8) is conical and has a height (h3) of 1.8 mm and a maximum diameter (d4) of 3.5 mm. In addition, the hexagonal protuberance (6) is characterized in that it has a height (h1) of 1.1 mm and in that a circle drawn external and touching the vertices of the hex has a diameter ranging between 2.8 and 3.0 mm and.

The blind threaded hole (5) of the implant (1) is shorter than the blind threaded holes present in conventional dental implants, so that it does not extend all the way to the cylindrical threaded area (10), which would be reducing the implant wall thickness to very fragile limits. In the inventive narrow implant (1) the blind threaded hole (5) has a height (h6) of between 2.5 and 3.0 mm and comprises a total of between 3 and 6 turns of thread, said thread presenting an internal diameter (d5) of between 1.3 and 1.7 mm and an external diameter (d6) of between 1.6 and 2.2 mm.

In addition, the blind threaded hole (5) includes a non-threaded first part (55) to help screws to be inserted, the height (h5) of this part (55) preferably being 0.7 mm.

The combination of a blind threaded hole (5) of the specified length, a conicity of the lower area (8) of the head (2) of the implant (1), and a reduction in the depth of the thread of the upper conical threaded area (9) makes the implant (1) especially robust and, thus, stronger.

## Claims

1. Dental implant (1), comprising a head (2) and a threaded body (3), and in which a blind threaded hole (5) is disposed, where the head (2) comprises a lower area (8), a cylindrical area (7) and a hexagonal protuberance (6), where the threaded body (3) comprises a cylindrical threaded area (10) and a lower conical threaded area (11), **characterised in that**:
- the cylindrical threaded area (10) has an internal diameter (d1) of between 1.9 and 2.7 mm and an external diameter (d2) of between 2.5 and 3.25 mm,
- the threaded body (3) comprises an upper conical threaded area (9) formed between the head (2) and the cylindrical threaded area (10), where in said upper conical threaded area (9) the thread increases in depth as it approaches the cylindrical threaded area (10), said depth always being less than that of the threads of the cylindrical threaded area (10),
- the blind threaded hole (5) has a height (h6) of between 2.5 and 3.0 mm and comprises a total of between 3 and 6 turns of thread,
- the blind threaded hole (5) presents an internal diameter (d5) of between 1.3 and 1.7 mm and an external diameter (d6) of between 1.6 and 2.2 mm.

2. Dental implant (1), according to claim 1, **characterised in that**:
- the hexagonal protuberance (6) has a height (h1) of 1.1 mm, and the diameter (d3) of a circumference circumscribed to the hexagonal protuberance is between 2.8 and 3.0 mm,
- the lower area (8) has a height (h3) of 1.8 mm and a maximum diameter (d4) of 3.5 mm,
- the upper conical threaded area (9) has a height (h4) of 1.2 mm and comprises a total of two turns of thread.

3. Dental implant (1), according to claim 1 or 2, **characterised in that** the blind threaded hole (5) includes a non-threaded first part (55).

4. Dental implant (1), according to claim 3, **characterised in that** the first non-threaded part (55) has a height (h5) of 0.7 mm.

## Patentansprüche

1. Zahnimplantat (1), bestehend aus einem Kopf (2) und einem Gehäuse mit Gewinde (3), in dem ein Gewindesackloch (5) angebracht ist, wobei der Kopf (2) einen unteren Bereich (8), einen zylindrischen Bereich (7) und einen sechseckigen Vorsprung (6) umfasst, und das Gehäuse mit Gewinde (3) einen mit einem zylindrischen Gewinde versehenen Bereich (10) und einen unteren, mit einem konischen Gewinde versehenen Bereich (11) umfasst, **dadurch gekennzeichnet, dass**:
- der mit einem zylindrischen Gewinde versehene Bereich (10) einen Innendurchmesser (d1) von 1,9 bis 2,7 mm und einen Außendurchmesser (d2) von 2,5 bis 3,25 mm aufweist,
- der Gehäuse mit Gewinde (3) einen oberen, mit einem konischen Gewinde versehenen Bereich (9) umfasst, der zwischen dem Kopf (2) und dem mit einem zylindrischen Gewinde versehenen Bereich (10) gebildet wird, wobei in besagtem oberen, mit einem konischen Gewinde versehenen Bereich (9) das Gewinde an Tiefe zunimmt, je näher es dem mit einem zylindrischen Gewinde versehenen Bereich (10) kommt, und besagte Tiefe immer geringer ist als die der Gewinde des mit einem zylindrischen Gewinde versehenen Bereichs (10),
- das Gewindesackloch (5) eine Höhe (h6) von 2,5 bis 3,0 mm aufweist, und insgesamt zwischen 3 und 6 Gewindegänge umfasst,
- das Gewindesackloch (5) einen Innendurchmesser (d5) von 1,3 bis 1,7 mm und einen Außendurchmesser (d6) von 1,6 bis 2,2 mm aufweist.

2. Zahnimplantat (1), gemäß Anspruch 1, **dadurch gekennzeichnet, dass**:
- der sechseckige Vorsprung (6) eine Höhe (h1) von 1,1 mm aufweist, und der Durchmesser (d3) eines Umfangs, der durch den sechseckigen Vorsprung (6) begrenzt wird, zwischen 2,8 und 3,0 mm liegt,
- der untere Bereich (8) eine Höhe (h3) von 1,8 mm und einen maximalen Durchmesser (d4) von 3,5 mm aufweist,
- der obere mit einem konischen Gewinde versehene Bereich (9) eine Höhe (h4) von 1,2 mm aufweist und insgesamt zwei Gewindegänge umfasst.

3. Zahnimplantat (1), gemäß den Ansprüchen 1 und 2, **dadurch gekennzeichnet, dass** das Gewindesackloch (5) einen ersten Teil ohne Gewinde (55) umfasst.

4. Zahnimplantat (1), gemäß Anspruch 1, **dadurch gekennzeichnet, dass** der erste Teil ohne Gewinde (55) eine Höhe (h5) von 0,7 mm aufweist.

## Revendications

1. Implant dentaire (1), comprenant une tête (2) et un corps fileté (3) et dans laquelle un trou fileté borgne (5) est disposé, où la tête (2) comprend une partie plus basse (8), une partie cylindrique (7) et une protubérance hexagonale (6), où le corps fileté (3) comprend une partie filetée cylindrique (10) et une partie filetée conique inférieur (11), **caractérisé par le fait que** :
- la partie filetée cylindrique (10) contient un diamètre interne (d1) compris entre 1,9 et 2,7 mm et un diamètre externe (d2) compris entre 2,5 et 3,25 mm,
- le corps fileté (3) comprend une partie filetée conique supérieure (9) formée entre la tête (2) et la partie filetée cylindrique (10), où dans ladite zone filetée conique supérieure (9) le filetage s'approfondit à l'approche de la partie filetée cylindrique (10), cette profondeur étant toujours inférieure à celle des filetages de la partie filetée cylindrique (10),
- le trou fileté borgne (5) a une hauteur (h6) comprise entre 2,5 et 3,0 mm et comprend un total de 3 à 6 tours de filetage,
- le trou fileté borgne (5) présente un diamètre interne (d5) compris entre 1,3 et 1,7 mm et un diamètre externe (d6) compris 1,6 et 2,2 mm.

2. Implant dentaire (1), conformément à la revendication 1, **caractérisé par le fait que**:
- la protubérance hexagonale (6) a une hauteur (h1) de 1,1 mm et le diamètre (d3) d'une circonférence circonscrite à la protubérance hexagonale est compris entre 2,8 et 3,0 mm,
- la partie inférieure (8) a une hauteur (h3) de 1,8 mm et un diamètre maximal (d4) de 3,5 mm,
- la partie filetée conique supérieure (9) a une hauteur (h4) de 1,2 mm et comprend un total de deux tours de filetage.

3. Implant dentaire (1), conformément à la revendication 1 ou 2, **caractérisé par le fait que** le trou fileté borgne (5) comprend une première partie non filetée (55).

4. Implant dentaire (1), conformément à la revendication 3, **caractérisé par le fait que** la première partie non filetée (55) a une hauteur (h5) de 0,7 mm.
